# EUROPEAN PATENT APPLICATION

(11) **EP 4 578 799 A1**
(43) Date of publication of application: **02.07.2025**
(21) Application number: 24165249.4
(22) Date of filing: 21.03.2024
(51) Int. Cl.: B65G 1/04

(54) **PALLET FORK MECHANISM, ARTICLE STORING AND EXTRACTING DEVICE, AND STORAGE LOGISTICS SYSTEM**

(30) Priority: 28.12.2023 CN 202311836799
(71) Applicant: Beijing Jingdong Qianshi Technology Co., Ltd., Beijing 100176 (CN)
(72) Inventor: ZHANG, Jian, BEIJING, 100176 (CN); ZHANG, Lei, BEIJING, 100176 (CN); CHEN, Ying, BEIJING, 100176 (CN); WANG, Zhen, BEIJING, 100176 (CN)
(74) Representative: Page White Farrer

(57) **Abstract**

The present disclosure relates to a pallet fork mechanism, a goods storing and extracting device, and a storage logistics system. The pallet fork mechanism (FM), including: a mounting frame (10); a hook assembly (20) movably provided on the mounting frame (10), and including a hook body (21), which has a hook-and-pull portion (211) for hooking and pulling an article (GS); and a first drive assembly (30) in drive connection with the hook assembly (20) and configured to drive the hook assembly (20) to move in a first direction (dr1) to achieve a function of hooking and pulling the article (GS) in the first direction (dr1) by means of the hook-and-pull portion (211).

## Description

### TECHNICAL FIELD

The present disclosure relates to the field of logistics, in particular to a pallet fork mechanism, an article storing and extracting device, and a storage logistics system.

### BACKGROUND

In a system for stock-in and stock-out of the material cases, pallet forks for storing and extracting are used to transfer material cases between the pallet forks and article locations in the racks. In some related art, pallet forks for storing and extracting include clamping-type pallet forks and lifting-type pallet forks. A clamping-type pallet fork extends fork plates on both sides of article, and clamps the article between the fork plates and swing arms on the pallet fork plates by means of the swing arms, so as to implement transfer of the article by applying a transverse push force or a transverse pull force to the article. A lifting-type pallet fork supports and lifts article by means of a lifting mechanism to implement transfer of the article in conjunction with a transverse drive mechanism.

### SUMMARY

The inventors have found through research that clamping-type pallet forks and lifting-type pallet forks in the related art have requirements for spacing between material cases stored in the storage rack or a layer height of the storage rack, such that a higher rack storage density is not easy to achieve, and articles are stored and extracted by the pallet forks at a slower speed and with lower efficiency.

In view of this, embodiments of the present disclosure provide a pallet fork mechanism, an article storing and extracting device, and a storage logistics system, which are conducive to achieving a higher rack storage density.

In an aspect of the present disclosure, a pallet fork mechanism is provided, which includes: a mounting frame; a hook assembly movably provided on the mounting frame, and including a hook body, which has a hook-and-pull portion for hooking and pulling an article; and a first drive assembly in drive connection with the hook assembly and configured to drive the hook assembly to move in a first direction to achieve a function of hooking and pulling the article in the first direction by means of the hook-and-pull portion.

In some embodiments, the hook body also has a push portion for pushing article, and the first drive assembly is further configured to drive the hook assembly to move in a second direction to achieve a function of pushing the article in the second direction by means of the push portion.

In some embodiments, the hook-and-pull portion and the push portion are located on two opposite sides of the hook body in the first direction, and the second direction is a direction opposite to the first direction.

In some embodiments, the hook assembly includes a bracket and at least one set of hook bodies connected to the bracket, and each set of hook bodies includes a single hook body or a plurality of hook bodies located on a same side of the bracket.

In some embodiments, the at least one set of hook bodies includes a first set of hook bodies and a second set of hook bodies, the first set of hook bodies is located on a side of the bracket away from the second set of hook bodies in the first direction, and the second set of hook bodies is located on a side of the bracket away from the first set of hook bodies in the second direction, wherein the first drive assembly is configured to: drive the hook assembly to move in the first direction to achieve a function of hooking and pulling the article in the first direction by means of a hook-and-pull portion of the first set of hook bodies, or to achieve a function of pushing the article in the first direction by means of a push portion of the second set of hook bodies; and/or drive the hook assembly to move in the second direction to achieve a function of pushing the article in the second direction by means of a push portion of the first set of hook bodies, or to achieve a function of hooking and pulling the article in the second direction by means of a hook-and-pull portion of the second set of hook bodies.

In some embodiments, the at least one set of hook bodies includes a single set of hook bodies, wherein the first drive assembly is configured to: drive the hook assembly to move in the first direction to achieve a function of hooking and pulling the article in the first direction by means of a hook-and-pull portion of the single set of hook bodies at a first rotation position, or to achieve a function of pushing the article in the first direction by means of a push portion of the single set of hook bodies at a second rotation position, wherein the single set of hook bodies switches between the first rotation position and the second rotation position by rotation, and the single set of hook bodies at the first rotation position and the single set of hook bodies at the second rotation position are in central symmetry; and/or drive the hook assembly to move in the second direction to achieve a function of pushing the article in the second direction by means of a push portion of the single set of hook bodies at a third rotation position, or to achieve a function of hooking and pulling the article in the second direction by means of a hook-and-pull portion of the single set of hook bodies at a fourth rotation position, wherein the single set of hook bodies switches between the third rotation position and the fourth rotation position by rotation, and the single set of hook bodies at the third rotation position and the single set of hook bodies at the fourth rotation position are in central symmetry.

In some embodiments, the hook-and-pull portion is configured to enter or leave a hookable-and-pullable part of the article in a direction that intersects with both the first direction and the second direction.

In some embodiments, the hook-and-pull portion is configured to enter the hookable-and-pullable part of the article in a vertically upward direction.

In some embodiments, the first drive assembly includes: a hook seat connected to the hook assembly; and a first power element connected to the hook seat by a first linear transmission structure, and configured to drive, by means of the first linear transmission structure, the hook seat to move in the first direction or the second direction.

In some embodiments, the first linear transmission structure includes: a transmission wheel set provided on the mounting frame and connected to the first power element; and a transmission belt wound around the transmission wheel set and fixedly connected to the hook seat.

In some embodiments, the first drive assembly further includes: a first linear guide structure provided between the hook seat and the mounting frame, and configured to guide a movement of the hook seat relative to the mounting frame in the first direction or the second direction.

In some embodiments, the first linear guide structure includes: a first slide rail provided on the mounting frame and extending in the first direction; and a first slide block provided on the hook seat to slip fit with the first slide rail.

In some embodiments, the pallet fork mechanism further includes: a second drive assembly in drive connection with the hook assembly, and configured to drive the hook assembly to move in a third direction or in a direction opposite to the third direction, wherein the third direction is perpendicular to the first direction.

In some embodiments, the first direction is parallel to a horizontal plane, and the third direction is parallel to a vertical direction.

In some embodiments, the first drive assembly includes a hook seat connected to the hook assembly, and the second drive assembly includes: a second power element connected to at least one of the hook seat and the hook assembly, and configured to drive the hook assembly to move relative to the hook seat.

In some embodiments, the second power element includes: a first through-shaft screw motor having a first electric motor housing fixedly connected to the hook seat, and a first lead screw running through the first electric motor housing, one end of the first lead screw being connected to the hook assembly, and the other end of the first lead screw running through the hook seat.

In some embodiments, the second drive assembly further includes: a second linear guide structure provided between the hook seat and the hook assembly, and configured to guide a movement of the hook assembly relative to the hook seat in the third direction or in the direction opposite to the third direction.

In some embodiments, the second linear guide structure includes: a second slide rail provided on the hook assembly and extending in the third direction; and a second slide block provided on the hook seat to slip fit with the second slide rail.

In some embodiments, the pallet fork mechanism further includes: a conveying assembly provided on the mounting frame, and configured to convey article in the first direction or the second direction.

In some embodiments, time ranges in which the conveying assembly and hook assembly respectively act on the article are configured to not overlap.

In some embodiments, time ranges in which the conveying assembly and hook assembly respectively act on the article are configured to overlap at least partially.

In some embodiments, the conveying assembly is located on an upper side of the mounting frame, and the pallet fork mechanism further includes: a second drive assembly in drive connection with the hook assembly or the first drive assembly, and configured to drive the hook assembly to move in the third direction or in the direction opposite to the third direction, so that the hook assembly extends or retracts relative to a conveying surface of the conveying assembly.

In some embodiments, the conveying assembly includes paired conveying members arranged spaced apart and a conveying drive element for driving the paired conveying members to operate, and the hook assembly is located between the paired conveying members or located on a side of at least one conveying member of the paired conveying members away from the other conveying member.

In some embodiments, the pallet fork mechanism further includes: a bracket, wherein the mounting frame is fixedly, detachably or movably provided on the bracket.

In some embodiments, the pallet fork mechanism further includes: a third drive assembly provided on the bracket and in drive connection with the mounting frame, and configured to drive the mounting frame to move relative to the bracket in the first direction or in a direction opposite to the first direction.

In some embodiments, the third drive assembly includes: a third power element connected to the mounting frame, and configured to drive the mounting frame to move relative to the bracket.

In some embodiments, the third power element includes: a second through-shaft screw motor having a second electric motor housing fixedly connected to the bracket, and a second lead screw running through the second electric motor housing, both ends of the second lead screw being connected to the mounting frame.

In some embodiments, the third drive assembly further includes: a third linear guide structure provided between the bracket and the mounting frame, and configured to guide the movement of the mounting frame relative to the bracket in the first direction or in the direction opposite to the first direction.

In some embodiments, the third linear guide structure includes: a third slide rail provided on the mounting frame and extending in the first direction; and a third slide block provided on the bracket and slidably cooperating with the third slide rail.

In an aspect of the present disclosure, an article storing and extracting device is provided, which includes: the above-described pallet fork mechanism.

In some embodiments, the article storing and extracting device further includes: at least two first tracks arranged spaced apart in at least one direction, and at least two second tracks movably provided along the at least two first tracks by means of traveling mechanisms, wherein the pallet fork mechanism is movably provided along the at least two second tracks.

In an aspect of the present disclosure, a storage logistics system is provided, including: a storage rack; and the article storing and extracting device according to claim 30 or 31, provided on the storage rack.

Thus, in embodiments according to the present disclosure, the first drive assembly is in drive connection with the hook assembly, and drives the hook assembly to move in the first direction to enable a hook-and-pull portion of a hook body of the hook assembly to implement a function of hooking and pulling the article in the first direction, such that the hook body can cause the article to move in the first direction by hooking and pulling the article on a side facing the article. Compared with a clamping-type pallet fork and a lifting-type pallet fork in the related art, the hook assembly does not need to clamp or lift article, and thus can reduce the requirements for spacing between articles in an article location and the height of an article location, thus being conducive to achieving a higher rack storage density.

### BRIEF DESCRIPTION OF THE DRAWINGS

The accompanying drawings, which form part of the description, illustrate embodiments of the present disclosure and together with the description, serve to explain the principles of the present disclosure.

The present disclosure can be more clearly understood from the following detailed descriptions with reference to the accompanying drawings, in which:
Fig. 1 is a schematic structural diagram of some embodiments of a storage logistics system according to the present disclosure;
Fig. 2 is a schematic diagram of a mounting structure of an article storing and extracting device on a storage rack in embodiments of a storage logistics system according to the present disclosure;
Fig. 3 is a schematic structural diagram of some embodiments of an article storing and extracting device according to the present disclosure;
Fig. 4 is a schematic structural diagram of some embodiments of a pallet fork mechanism according to the present disclosure;
Fig. 5 is a schematic structural diagram of carrying the article in embodiments of a pallet fork mechanism according to the present disclosure;
Fig. 6 is a schematic structural diagram of the article as applied in embodiments of a pallet fork mechanism according to the present disclosure;
Fig. 7 is a schematic principle diagram of hooking and pulling the article in a first direction in embodiments of a pallet fork mechanism according to the present disclosure;
Fig. 8 is a schematic principle diagram of pushing the article in a second direction in embodiments of a pallet fork mechanism according to the present disclosure;
Fig. 9 is a schematic diagram of a mounting structure of a hook assembly, a first drive assembly and a second drive assembly in embodiments of a pallet fork mechanism according to the present disclosure;
Fig. 10 is a schematic structural diagram of the mounting structure shown in Fig. 9 with some of the structure omitted;
Fig. 11 is a schematic diagram of a mounting structure of a mounting frame and a first drive assembly in embodiments of a pallet fork mechanism according to the present disclosure;
Fig. 12 is a schematic diagram of a mounting structure of a hook assembly and a second drive assembly in embodiments of a pallet fork mechanism according to the present disclosure;
Fig. 13 is a schematic diagram of driving the hook assembly to extend in a third direction by the second drive assembly in the mounting structure shown in Fig. 12;
Fig. 14 is a schematic diagram of a mounting structure of a bracket and a third drive assembly in embodiments of a pallet fork mechanism according to the present disclosure;
Fig. 15 is a schematic diagram of rotation for the form of a single set of hook bodies in embodiments of a pallet fork mechanism according to the present disclosure;
Figs. 16 and 17 are respectively schematic diagrams of entering a hookable-and-pullable part of the article in different directions, in embodiments of a pallet fork mechanism according to the present disclosure;
Figs. 18 and 19 are respectively schematic diagrams illustrating different relative positions between paired conveying members and a hook assembly in embodiments of a pallet fork mechanism according to the present disclosure.
Fig. 20 shows, in (a)-(d), respectively, three-dimensional schematic diagrams of hooking and pulling and pushing the article in a first direction, and hooking and pulling and pushing article in a second direction, respectively, in embodiments of a pallet fork mechanism according to the present disclosure;
Fig. 21 shows, in (a)-(f), respectively, schematic diagrams of a process of transferring article on an article location to a pallet fork mechanism in embodiments of a pallet fork mechanism according to the present disclosure; and
Fig. 22 shows, in (a)-(e), respectively, schematic diagrams of a process of transferring article on a pallet fork mechanism to an article location in embodiments of a pallet fork mechanism according to the present disclosure.

It should be understood that the dimensions of various parts shown in the accompanying drawings are not drawn according to an actual scale relationship. In addition, the same or similar reference signs indicate the same or similar components.

### DETAILED DESCRIPTION

Various exemplary embodiments of the present disclosure will now be described in detail with reference to the accompanying drawings. The descriptions of the exemplary embodiments are merely illustrative and are in no way intended to limit the present disclosure, and application or uses thereof. The present disclosure can be implemented in many different forms and is not limited to the embodiments described herein. These embodiments are provided, so that the present disclosure will be thorough and complete, and will fully convey the scope of the present disclosure to those skilled in the art. It should be noted that unless otherwise specified, the relative arrangement of components and steps, the composition of materials, numerical expressions and numerical values set forth in these embodiments should be interpreted as merely illustrative and not as limitative.

Similar words of "first", "second" and the like used in the present disclosure do not indicate any order, quantity or importance, but are only used to distinguish different parts. Similar words such as "including" or "comprising" mean that the elements before the word cover the elements listed after the word, without excluding the possibility of covering other elements. "Upper", "lower", "left", "right" and the like are only used to indicate a relative positional relationship. After the absolute position of a described object changes, the relative positional relationship may also change accordingly.

In the present disclosure, when it is described that a specific device is located between a first device and a second device, there may be an intervening device between the specific device and the first device or the second device or not. When it is described that the specific device is connected to other devices, the specific device may be directly connected to the other devices without the intervening device, and may also have the intervening device without being directly connected to the other devices.

All terms (including technical terms or scientific terms) used in the present disclosure have the same meanings as those understood by ordinary skilled in the art to which the present disclosure belongs, unless otherwise defined particularly. It should also be understood that the terms defined in, for example, general dictionaries should be interpreted as having the meanings consistent with their meanings in the context of the related art, and should not be interpreted in an idealized or extremely formal sense unless explicitly defined herein.

Technologies, methods and equipment known to those skilled in the related art may not be discussed in detail, but the technologies, methods and equipment should be regarded as part of the description under appropriate circumstances.

In some related art, storing and extracting pallet forks include clamping-type pallet forks and lifting-type pallet forks. A clamping-type pallet fork extends pallet fork plates on both sides of article, and clamps the article between the fork plates and swing arms by means of the swing arms on the fork plates to implement transfer of the article by applying a transverse push or pull force to the article. A lifting-type pallet fork supports and lifts article by means of a lifting mechanism to implement transfer of the article in conjunction with a transverse drive mechanism.

The inventors have found through research that clamping-type pallet forks and lifting-type pallet forks in the related art have requirements for spacing between material cases stored in a storage rack or a layer height of the storage rack, such that a higher storage rack storage density is not easy to achieve, and articles are stored and extracted by the pallet forks at a slower speed and with lower efficiency.

In view of this, embodiments of the present disclosure provide a pallet fork mechanism, an article storing and extracting device, and a storage logistics system, which are conducive to achieving a higher rack storage density.

In one aspect of the present disclosure, there is provided a pallet fork mechanism including: a mounting frame; a hook assembly movably provided on the mounting frame, and including a hook body, which has a hook-and-pull portion for hooking an article; and a first drive assembly in drive connection with the hook assembly and configured to drive the hook assembly to move in a first direction to achieve a function of hooking and pulling the article in the first direction by means of the hook-and-pull portion.

In the present embodiments, the first drive assembly is in drive connection with the hook assembly, and drives the hook assembly to move in the first direction to enable a hook-and-pull portion of a hook body of the hook assembly to implement a function of hooking and pulling the article in the first direction, such that the hook body can cause the article to move in the first direction by hooking and pulling the article on a side facing the article. Compared with a clamping-type pallet fork and a lifting-type pallet fork in the related art, the hook assembly does not need to clamp or lift article, and thus can reduce the requirements for spacing between articles in an article location and the height of an article location, thus being conducive to achieving a higher rack storage density.

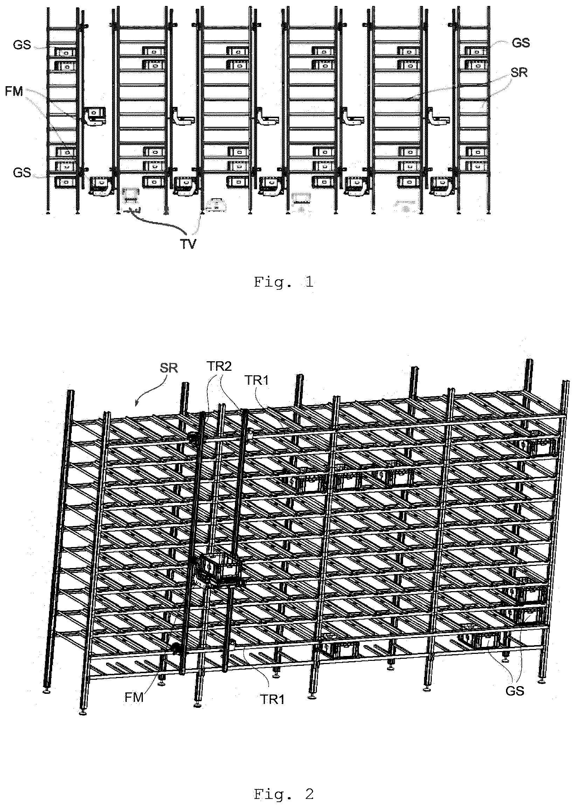

Fig. 1 is a schematic structural diagram of some embodiments of a storage logistics system according to the present disclosure. Referring to Fig. 1, embodiments of the present disclosure provide a storage logistics system including a storage rack SR and an article storing and extracting device. The storage rack SR may be configured as a single-layer or multi-layer structure, and each layer of the storage rack SR may be provided with one or more article locations (i.e., article storage spaces) for storing the article GS. The plurality of article locations may be separated from each other, and may also be communicated with each other. The plurality of article locations in each layer may be arranged in at least one direction, such as arranged in one direction parallel to a horizontal plane or in two directions orthogonal to each other.

The article storing and extracting device is provided on the storage rack SR, may be used to take out the article GS from a designated article location in the storage rack SR, and may also be used to place the article GS into a designated article location in the storage rack SR. The article storing and extracting device is movable relative to the storage rack SR, such as moving to a position of a site adjacent to the storage rack SR, so as to pick up the article GS from a temporary storage location in the storage rack SR (e.g., a lower article location in the storage rack SR) or from a transfer vehicle TV operating on the site, or to place the article GS taken from the storage rack SR into a temporary storage location in the storage rack SR (e.g., a lower article location in the storage rack SR) or into a transfer vehicle TV operating on the site. The transfer vehicle TV may put the article GS transported thereon into a temporary storage location in the storage rack SR, or take and transport away a temporary storage location in the storage rack SR.

The storage logistics system may include a single storage rack SR, or a plurality of storage racks SR as shown in Fig. 1. For the plurality of storage racks SR, the storage racks may be arranged spaced apart, and an operating space for an article storing and extracting device may be formed between neighboring storage racks SR. One or more article storing and extracting devices may be provided between neighboring storage racks SR. The plurality of article storing and extracting devices may be provided on a storage rack located on one side of the neighboring storage racks SR, and may also be provided on both neighboring storage racks SR.

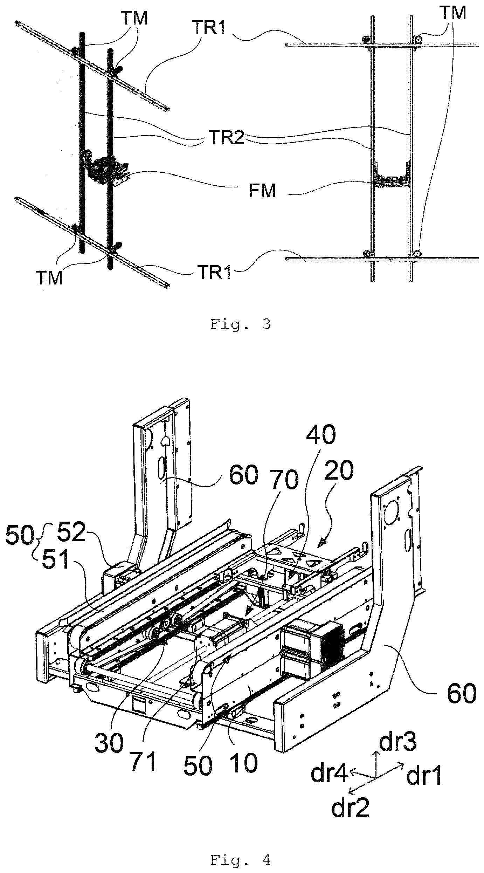

Fig. 2 is a schematic diagram of a mounting structure of an article storing and extracting device on a storage rack in embodiments of a storage logistics system according to the present disclosure. Fig. 3 is a schematic structural diagram of some embodiments of an article storing and extracting device according to the present disclosure. Referring to Figs. 2 and 3, embodiments of the present disclosure provide an article storing and extracting device including a pallet fork mechanism FM. In embodiments of the storage logistics system of the present disclosure, the article storing and extracting device may be provided on a storage rack SR. In other embodiments, the article storing and extracting device may, but not limited to, be applied in a storage logistics system.

Referring to Figs. 2 and 3, in some embodiments, the article storing and extracting device may further include: at least two first tracks TR1 and at least two second tracks TR2. The at least two first tracks TR1 are arranged spaced apart in at least one direction, and the at least two second tracks TR2 are movably provided along the at least two first tracks TR1 by means of traveling mechanisms TM. The pallet fork mechanism FM is movably provided on the at least two second tracks TR2.

In Figs. 2 and 3, the article storing and extracting device may include two transversely extending first tracks TR1 and two vertically extending second tracks TR2. The two first tracks TR1 are arranged spaced apart in a vertical direction. The first tracks TR1 may be mounted on a frame of the storage rack SR, and may also be formed by the frame of the storage rack SR. For example, in Fig. 2, a frame cross beam of the highest layer of the storage rack SR and a frame cross beam of a layer of the storage rack SR adjacent to the site may be used as the two first tracks TR1, respectively.

The two second tracks TR2 are arranged spaced apart in a transverse direction, and the pallet fork mechanism FM may have end portions movably connected to the two tracks TR2, respectively, and is located on a side away from the storage rack SR, of an operating plane formed by the two second tracks TR2. Moreover, the pallet fork mechanism FM may be located between the two second tracks TR2 to allow the article GS to pass through a gap between the two second tracks TR2.

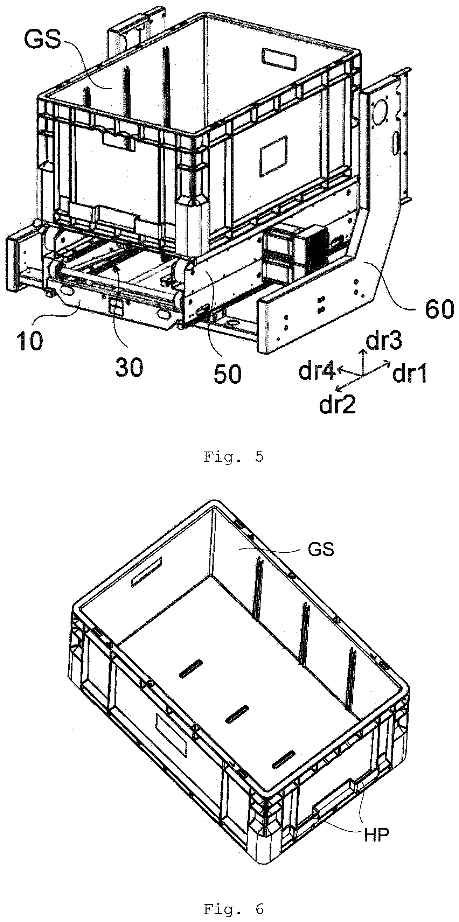

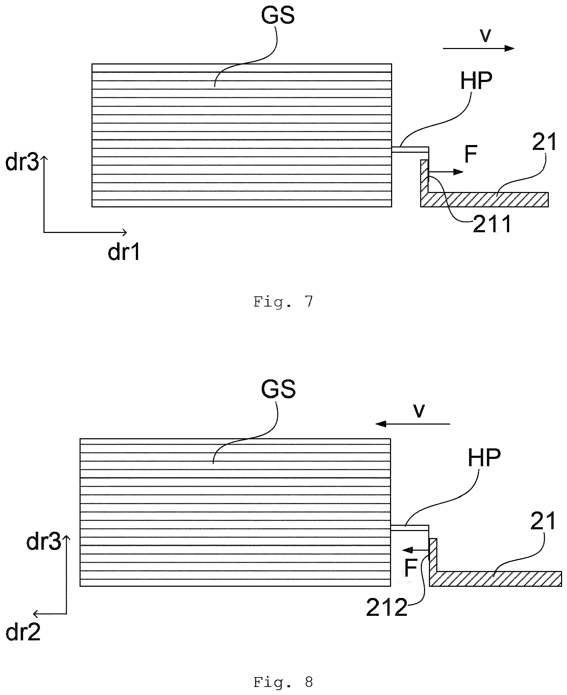

Fig. 4 is a schematic structural diagram of some embodiments of a pallet fork mechanism according to the present disclosure. Fig. 5 is a schematic structural diagram of carrying the article in embodiments of a pallet fork mechanism according to the present disclosure. Fig. 6 is a schematic structural diagram of the article as applied in embodiments of a pallet fork mechanism according to the present disclosure. Fig. 7 is a schematic principle diagram of hooking and pulling the article in a first direction in embodiments of a pallet fork mechanism according to the present disclosure.

Referring to Figs. 4, 5 and 7, embodiments of the present disclosure provide a pallet fork mechanism FM. In embodiments of the article storing and extracting device of the present disclosure, the article storing and extracting device includes the pallet fork mechanism FM. In other embodiments, the pallet fork mechanism FM may, but not limited to, be applied in an article storing and extracting device.

In embodiments of the present disclosure, the pallet fork mechanism FM includes a mounting frame 10, a hook assembly 20, and a first drive assembly 30. The hook assembly 20 is movably provided on the mounting frame 10. The hook assembly 20 includes a hook body 21. The hook body 21 has a hook-and-pull portion 211 for hooking and pulling the article GS. The first drive assembly 30 is in drive connection with the hook assembly 20 and is configured to drive the hook assembly 20 to move in a first direction dr1 to achieve a function of hooking and pulling the article GS in the first direction dr1 by means of the hook-and-pull portion 211.

The mounting frame 10 may be of a frame structure to facilitate mounting of the hook assembly 20 and the first drive assembly 30 and to reduce or eliminate a risk of the hook assembly 20 interfering with the mounting frame 10 during operation. In other embodiments, the mounting frame 10 may also be in other structural form, such as a plate-type structure or a box-type structure.

The hook body 21 of the hook assembly 20 can implement hooking and pulling of the article GS, and accordingly, the hook body 21 has a hook-and-pull portion 211. The form of the hook body 21 may be an L-shape, a U-shape, or other shape. The hook-and-pull portion 211 can enter a hookable-and-pullable part HP of the article GS from at least one side of the hookable-and-pullable part HP in order to reach a position where the article GS may be hooked and pulled.

Fig. 6 shows the article GS in the form of an article box, having an interior space in which whole or bulk items may be contained. A hooking slot as the hookable-and-pullable part HP may be provided on an outer wall of the article GS, so that the hook-and-pull portion 211 of the hook body 21 hooks and pulls an inner wall of the hooking slot to achieve the function of hooking and pulling the article GS. The hooking slot may be a slot fixed to a side of the article by means of a sheet metal or plastic piece, and may also be formed by injection molding integrally with the article box.

Referring to Fig. 7, the hook body 21 may move in the first direction dr1 under the drive of the first drive assembly 30, and accordingly, the hook-and-pull portion 211 of the hook body 21 can apply a force F in the first direction dr1 to the hookable-and-pullable part HP of the article GS, so that the article GS move at a certain speed and a certain acceleration in the first direction dr1.

Referring to the storage rack shown in Fig. 2, the pallet fork mechanism FM can pull out the article GS in an article location to the pallet fork mechanism FM by means of the hook-and-pull portion 211 of the hook body 21. At that time, the hook body 21 may, on a side facing the article GS, hook and pull the article GS, without acting on the article GS from left and right sides, a back side, or a bottom side of the article GS in order to implement the movement of the article GS as in the cases of a clamping-type pallet fork and a lifting-type pallet fork in the related art, so the requirements for spacing between article in an article location and the height of an article location can be reduced, thus being conducive to achieving a higher rack storage density.

In a business scenario of storage logistics, the first direction dr1 may be a direction from the storage rack to the pallet fork mechanism, and the direction may be parallel to a horizontal plane or at a preset angle relative to the horizontal plane.

Fig. 8 is a schematic principle diagram of pushing article in a second direction in embodiments of a pallet fork mechanism according to the present disclosure. Referring to Fig. 8, in some embodiments, the hook body 21 also has a push portion 212 for pushing the article GS. The first drive assembly 30 is further configured to drive the hook assembly 20 to move in a second direction dr2 to achieve a function of pushing the article GS in the second direction dr2 by means of the push portion 212.

In the present embodiments, the first drive assembly 30 may drive the hook assembly 20 to move in the second direction dr2. In some embodiments, the second direction dr2 may be a direction opposite to the first direction dr1, i.e., the second direction dr2 is parallel to and opposite to the first direction dr1. In other embodiments, the second direction dr2 may cross the first direction dr1 at an acute, obtuse, or right angle.

With the driving of the hook assembly 20 by the first drive assembly 30, the push portion 212 of the hook body 21 can achieve the function of pushing the article GS. Referring to Fig. 8, the push portion 212 may act on the outside of the hookable-and-pullable part HP of the article GS, and by applying a force F in the second direction dr2, may cause the article GS to move at a certain speed and a certain acceleration in the second direction dr2. The push portion 212 may, but not limited to, act on the outside of the hookable-and-pullable part HP, and may also act on other parts on a side of the article GS facing the push portion.

In embodiments in which the second direction dr2 is a direction opposite to the first direction dr1, the hook-and-pull portion 211 and the push portion 212 may be located on two opposite sides of the hook body 21 in the first direction dr1, respectively. Referring to Figs. 7 and 8, a left side surface of a bent structure of the L-shaped hook body may serve as the push portion 212, and a right side surface of the bent structure may serve as the hook-and-pull portion 211. This can achieve, by means of the hook body, the functions of pushing and hooking and pulling a structure on a side of the article GS adjacent to the hook body, and facilitates taking out the article GS from the article location and placing the article into the article location, and further reduces the requirements for spacing between article in an article location and the height of an article location, thus being conducive to achieving a higher rack storage density.

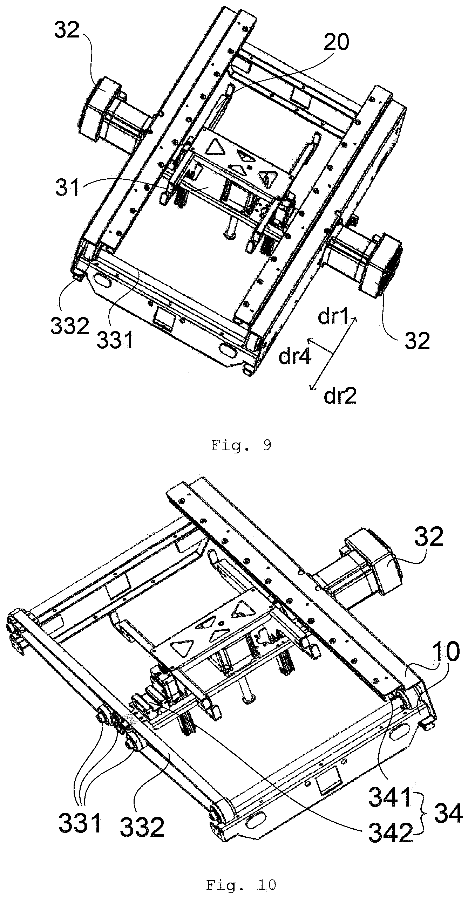

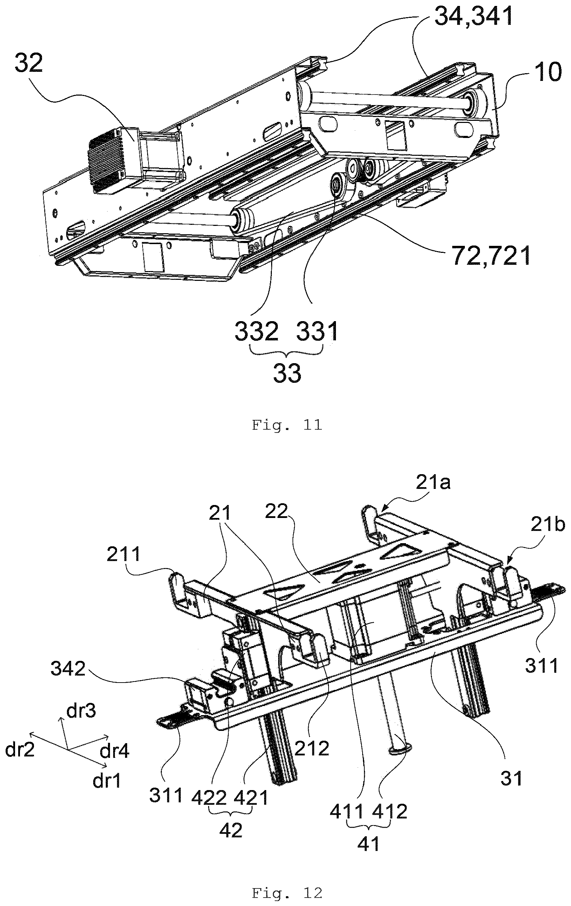

Fig. 9 is a schematic diagram of a mounting structure of a hook assembly, a first drive assembly and a second drive assembly in embodiments of a pallet fork mechanism according to the present disclosure. Fig. 10 is a schematic structural diagram of the mounting structure shown in Fig. 9 with some of the structure omitted. Fig. 11 is a schematic diagram of a mounting structure of a mounting frame and a first drive assembly in embodiments of a pallet fork mechanism according to the present disclosure.

Referring to Figs. 9 to 11, in some embodiments, the first drive assembly 30 further includes a hook seat 31 and a first power element 32. The hook seat 31 is connected to the hook assembly 20. The first power element 32 is connected to the hook seat 31 by a first linear transmission structure 33, and is configured to drive, by means of the first linear transmission structure 33, the hook seat 31 to move in the first direction dr1 or the second direction dr2.

The hook assembly 20 is connected to the hook seat 31, and when the hook seat 31 moves under the drive of the first power element 32 by means of the first linear transmission structure 33, the hook seat 31 also causes the hook assembly 20 to move accordingly. The first power element 32 may include, but not limited to, an electric motor or a pneumatic motor or the like.

Referring to Figs. 10 to 11, in some embodiments, the first linear transmission structure 33 includes a transmission wheel set 331 and a transmission belt 332. The transmission wheel set 331 is provided on the mounting frame 10 and is connected to the first power element 32. The transmission belt 332 is wound around the transmission wheel set 331, and is fixedly connected to the hook seat 31.

The first power element 32 may output a torque to some of transmission wheels of the transmission wheel set 331 to drive the transmission wheels to rotate, and driven by the transmission wheels, the transmission belt 332 moves around the transmission wheel set 331, and the hook seat 31 fixedly connected to the transmission belt 332 also moves with the transmission belt 332 accordingly. The first power element 32 may be arranged on an outer side of the first linear transmission structure 33 to avoid interference with the hook seat 31 and the hook assembly 20.

In other embodiments, the first linear transmission structure 33 may also be in other transmission form, such as a gear-rack transmission structure or a ball screw transmission structure.

Referring to Fig. 10, in some embodiments, the first drive assembly 30 further includes a first linear guide structure 34. The first linear guide structure 34 is provided between the hook seat 31 and the mounting frame 10, and is configured to guide the movement of the hook seat 31 relative to the mounting frame 10 in the first direction dr1 or the second direction dr2.

The first linear guide structure 34 can assist the first linear transmission structure 33 so that the hook seat 31 stably moves linearly in the first direction d1 or the second direction dr2, to reduce the risk of the article GS falling off due to instability during movement.

Referring to Figs. 10 to 11, in some embodiments, the first linear guide structure 34 includes a first slide rail 341 and a first slide block 342. The first slide rail 341 is provided on the mounting frame 10 and extends in the first direction dr1. The first slide block 342 is provided on the hook seat 31 to slip fit with the first slide rail 341.

A continuous slide guiding effect can be achieved between the first slide rail 341 and the first slide block 342, so that the movement of the hook seat 31 relative to the mounting frame 10 is smoother and more stable. In other embodiments, the first linear guide structure 34 may be in other structural form, such as a guide structure in which a plain shaft mates with a sleeve.

Referring to Fig. 4, in some embodiments, the pallet fork mechanism FM further includes a second drive assembly 40. The second drive assembly 40 is in drive connection with the hook assembly 20 or the first drive assembly 30, and is configured to drive the hook assembly 20 to move in a third direction dr3 or in a direction opposite to the third direction dr3, wherein the third direction dr3 is perpendicular to the first direction dr1.

The hook assembly 20 may move in the third direction dr3 or in the direction opposite to the third direction dr3 under direct drive of the second drive assembly 40 or under indirect drive of the second drive assembly 40 via the first drive assembly 30. The movement of the hook assembly 20 in the third direction dr3 or in the direction opposite to the third direction dr3 can achieve avoidance of the article GS. Referring to Fig. 5, when the article GS has reached right above the pallet fork mechanism FM, the hook assembly 20 may move to a lower side of the article GS to avoid interfering with the support and movement of the article GS.

In some embodiments, the first direction dr1 is parallel to the horizontal plane, and the third direction dr3 is parallel to the vertical direction. That is, the hook assembly 20 can achieve a hooking and pulling function in the horizontal direction, and arrive at or leave a position where the article GS may be hooked and pulled, in the vertical direction. In conjunction with the driving of the hook assembly 20 by the first drive assembly 30, it is also possible to adjust the position of the hook assembly 20 when the hook assembly 20 is adjusted vertically, thereby allowing the hook assembly 20 to adjust its orientation and distance relative to the article GS.

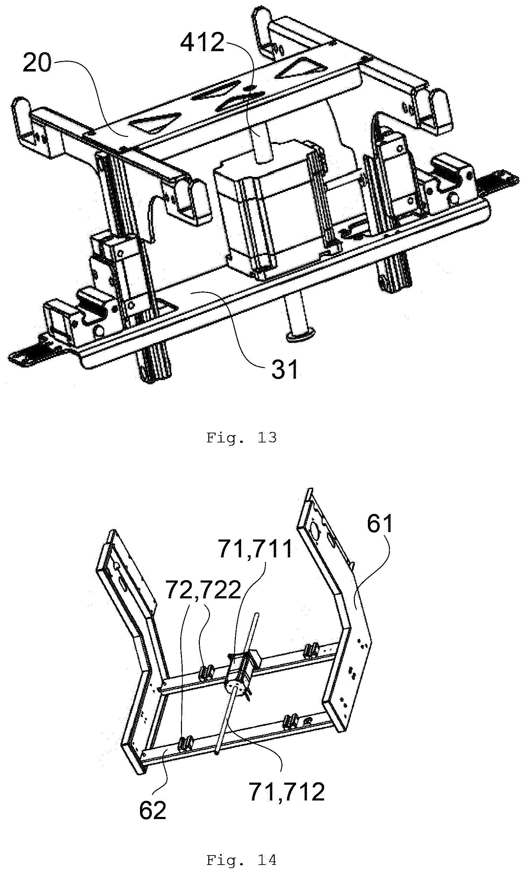

Fig. 12 is a schematic diagram of a mounting structure of a hook assembly and a second drive assembly in embodiments of a pallet fork mechanism according to the present disclosure. Fig. 13 is a schematic diagram of driving the hook assembly to extend in a third direction by the second drive assembly in the mounting structure shown in Fig. 12. Referring to Figs. 4, 12 and 13, in some embodiments, the first drive assembly 30 includes a hook seat 31 in drive connection with the hook assembly 20, and the second drive assembly 40 includes a second power element 41. The second power element 41 is in drive connection with the hook assembly 20, and is configured to drive the hook assembly 20 to move relative to the hook seat 31.

The second power element 41 may include an electric motor or a pneumatic motor, and drives the hook assembly 20 so that the hook assembly 20 moves relative to the hook seat 31 in the third direction dr3 or in a direction opposite to the third direction dr3.

Referring to Figs. 12 and 13, in some embodiments, the second power element 41 includes a first through-shaft screw motor. The first through-shaft screw motor has a first electric motor housing 411 fixedly connected to the hook seat 31, and a first lead screw 412 running through the first electric motor housing 411. One end of the first lead screw 412 is connected to the hook assembly 20, and the other end of the first lead screw runs through the hook seat 31.

When the first through-shaft screw motor performs forward or reverse rotation, the first lead screw 412 may move forward or backward in an extension direction of the first lead screw 412. By fixedly connecting the first electric motor housing 411 of the first through-shaft screw motor to the hook seat 43 and connecting one end of the first lead screw 412 to the hook assembly 20, the hook assembly 20 can be caused to move away from or close to the hook seat 43 when the first lead screw 412 moves relative to the first electric motor housing 411. The extension direction of the first lead screw 412 is parallel to the third direction dr3. For such a through-shaft screw motor, a screw length between the hook seat 43 and the hook assembly 20 may be reduced with the increase of a screw length passed through the hook seat 31, which is conducive to achieving a more compact structure. Moreover, the first electric motor housing 411 can also form a function of supporting and limiting the hook assembly 20.

To enable the hook assembly 20 to move more stably relative to the hook seat 31 in the third direction dr3 or in the direction opposite to the third direction dr3, with reference to Figs. 12 and 13, in some embodiments, the second drive assembly 40 further includes a second linear guide structure 42. The second linear guide structure 42 is provided between the hook seat 31 and the hook assembly 20, and is configured to guide the movement of the hook assembly 20 relative to the hook seat 31 in the third direction dr3 or in the direction opposite to the third direction dr3.

In Fig. 12, the second linear guide structure 42 may include a second slide rail 421 and a second slide block 422. The second slide rail 421 is provided on the hook assembly 20, and extends in the third direction dr3. The second slide block 422 is provided on the hook seat 31 to slip fit with the second slide rail 421. The second slide rail 421 may be provided on a bracket, which extends in the third direction dr3, of the hook assembly 20, and may also be fixedly connected to the hook assembly 20 to serve as a bracket of the hook assembly 20.

A continuous slide guiding effect can be achieved between the second slide rail 421 and the second slide block 422, so that the movement of the hook assembly 20 relative to the hook seat 31 is smoother and more stable. In other embodiments, the second linear guide structure 42 may be in other structural form, such as a guide structure in which a plain shaft mates with a sleeve.

Figs. 12 and 13 respectively illustrate different relative positions of the second slide rail 421 and the second slide block 422, and different relative distances between the hook seat 31 and the hook assembly 20, under the guide of the second linear guide structure 42.

Referring to Fig. 4, in some embodiments, the pallet fork mechanism FM further includes a conveying assembly 50. The conveying assembly 50 is provided on the mounting frame 10, and is configured to convey the article GS in the first direction dr1 or the second direction dr2. Both the hook assembly 20 and the conveying assembly 50 may act on the article GS to cause the article GS to move, so the hook assembly 20 and the conveying assembly 50 may be appropriately configured according to the actual need, to achieve a more complex working process and improve the adaptability of storing and extracting article in different scenarios.

In some embodiments, the time ranges in which the conveying assembly 50 and hook assembly 20 respectively act on the article GS are configured to not overlap. For example, the article GS are first hooked and pulled by the hook assembly 20, and after being hooked and pulled a preset displacement, the article GS is further conveyed by the conveying assembly 50 instead. As another example, the article GS are first conveyed by the conveying assembly 50, and after conveyed a preset displacement, the article GS are pushed by the hook assembly 30 instead. This configuration can effectively reduce the risk of the conveying assembly 50 and the hook assembly 20 interfering with each other.

In other embodiments, the time ranges in which the conveying assembly 50 and hook assembly 20 respectively act on the article GS are configured to overlap at least partially. For example, during at least part of the process of hooking and pulling the article GS by the hook assembly 20, the article GS are conveyed in the same direction by the conveying assembly 50. As another example, during at least part of the process of conveying the article GS by the conveying assembly 50, the article GS are pushed by the hook assembly 30 in the same direction. This configuration allows the conveying assembly 50 and the hook assembly 20 to act on the article GS in the same direction, and increases a driving force on the article GS, thereby meeting the driving need of heavier article GS, and accordingly making it easy to achieve a cohesive process in which the conveying assembly 50 and the hook assembly 20 respectively act on the article GS, which is conducive to improving the efficiency.

Referring to Figs. 4 and 5, in some embodiments, the conveying assembly 50 is located on an upper side of the mounting frame 10, and the pallet fork mechanism FM further includes a second drive assembly 40. The second drive assembly 40 is in drive connection with the hook assembly 20 or the first drive assembly 30, and is configured to drive the hook assembly 20 to move in the third direction dr3 or in the direction opposite to the third direction dr3, so that the hook assembly 20 extends or retracts relative to a conveying surface of the conveying assembly 50.

The conveying assembly 50 may be a carrier roller, a belt, or other structural form that can implement conveyance. In Figs. 4 and 5, the conveying assembly 50 is two conveyor belts arranged side by side. In addition to the function of conveying the article GS, the conveying assembly 50 located on the upper side of the mounting frame 10 also serves the function to support the article GS, which includes a function of mobile supporting to the article GS by the conveying assembly 50 when the hook assembly 20 acts on the article GS. The hook assembly 20 may move, by means of the second drive assembly 40, in the third direction dr3 or in the direction opposite to the third direction dr3 to extend or retract relative to the conveying surface of the conveying assembly 50.

When the hook assembly 20 extends relative to the conveying surface of the conveying assembly 50, the hook assembly 20 can hook or push the article GS. When the hook assembly 20 retracts relative to the conveying surface of the conveying assembly 50, the article GS can move on the conveying surface without interfering with the hook assembly 20. In addition, the second drive assembly 40 may cooperate with the first drive assembly 30 so that the hook assembly 20 moves on a lower side of the conveying surface of the conveying assembly 50 to adjust the position of the hook assembly when the hook assembly extends.

Fig. 14 is a schematic diagram of a mounting structure of a bracket and a third drive assembly in embodiments of a pallet fork mechanism according to the present disclosure. Referring to Figs. 4 and 14, in some embodiments, the pallet fork mechanism FM further includes a bracket 60. The mounting frame 10 is fixedly, detachably or movably provided on the bracket 60. The bracket 60 may be movably provided relative to the second rails TR2 in embodiments of an article storing and extracting device. In Fig. 14, the bracket 60 may include two L-shaped vertical plates 61, and at least one transverse plate 62 that connects the two L-shaped vertical plates 61 and is located between the two L-shaped vertical plates 61. In Fig. 14, the two transverse plates 62 are arranged spaced apart in the first direction dr1.

The mounting frame 10 may be fixedly connected to the bracket 60 (also including the case where they are formed integrally) such that the mounting frame 10 may move synchronously with the movement of the bracket 60. The mounting frame 10 may also be detachable relative to the bracket 60 such that the mounting frame 10 and the structure thereon may be detached together from the bracket 60 to facilitate maintenance and replacement. The mounting frame 10 may also be movable relative to the bracket 60, such that the mounting frame 10 may be moved to a position at a preset distance from the storage rack when the bracket 60 is in motion, to avoid interference with the storage rack when the pallet fork mechanism FM is in motion, and the mounting frame may be moved to a position adjacent to the storage rack when article need to be taken or placed, to reduce a docking gap and reduce the risk of the article being stuck or falling off in the taking or placement process.

Referring to Figs. 4 and 14, in some embodiments, the pallet fork mechanism FM further includes a third drive assembly 70. The third drive assembly 70 is provided on the bracket 60 and in drive connection with the mounting frame 10, and is configured to drive the mounting frame 10 to move relative to the bracket 60 in the first direction dr1 or in the direction opposite to the first direction dr1.

The mounting frame 10 may move in the first direction dr1 or in the direction opposite to the first direction dr1 under the drive of the third drive assembly 70. In this way, the position of the mounting frame 10 may be adjusted in a direction same as or opposite to the direction of movement of the article GS to facilitate transition of the article GS between the article location and the pallet fork mechanism.

Referring to Fig. 14, in some embodiments, the third drive assembly 70 further includes a third power element 71. The third power element 71 is connected to both the mounting frame 10 and the bracket 60, and is configured to drive the mounting frame 10 to move relative to the bracket 60.

The third power element 71 may include an electric motor or a pneumatic motor, and drives the mounting frame 10 so that the mounting frame 10 moves relative to the bracket 60 in the first direction dr1 or in the direction opposite to the first direction dr1.

In Fig. 14, the third power element 71 may include a second through-shaft screw motor. The second through-shaft screw motor has a second electric motor housing 711 fixedly connected to the bracket 60, and a second lead screw 712 running through the second electric motor housing 711. Both ends of the second lead screw 712 are connected to the mounting frame 10.

When the second through-shaft screw motor performs forward or reverse rotation, the second lead screw 712 may move forward or backward in an extension direction of the second lead screw 712. By fixedly connecting the second electric motor housing 711 of the second through-shaft screw motor to the transverse plate 62 of the bracket 60 and connecting both ends of the second lead screw 712 to the mounting frame 10, the mounting frame 10 can be caused to translate on the bracket 60 when the second lead screw 712 moves relative to the second electric motor housing 711. The extension direction of the second lead screw 712 is parallel to the first direction dr1.

To enable the mounting frame 10 to move more stably relative to the bracket 60 in the first direction dr1 or in the direction opposite to the first direction dr1, with reference to Figs. 11 and 14, in some embodiments, the third drive assembly 70 further includes a third linear guide structure 72. The third linear guide structure 72 is provided between the bracket 60 and the mounting frame 10, and is configured to guide the movement of the mounting frame 10 relative to the bracket 60 in the first direction dr1 or in the direction opposite to the first direction dr1.

In Figs. 11 and 14, the third linear guide structure 72 includes a third slide rail 721 and a third slide block 722. The third slide rail 721 is provided on the mounting frame 10 and extends in the first direction dr1. The third slide block 722 is provided on the bracket 60 to slip fit with the third slide rail 721. A plurality of third slide blocks 722 may be provided, and distributed on at least two transverse plates 62. The third slide rail 721 may be provided on a bottom surface of the mounting frame 10.

A continuous slide guiding effect can be achieved between the third slide rail 721 and the third slide block 722, so that the movement of the mounting frame 10 relative to the bracket 60 is smoother and more stable. In other embodiments, the third linear guide structure 72 may be in other structural form, such as a guide structure in which a plain shaft mates with a sleeve.

In the above embodiments, the hook assembly 20 may include a bracket 22 and at least one set of hook bodies 21 connected to the bracket 22, each set of hook bodies 21 including a single hook 21 or a plurality of hook bodies 21 located on a same side of the bracket 22. The configuration of the hook body 21 can implement storage of article on a single side or different sides.

Referring to Fig. 12, in some embodiments, the at least one set of hook bodies 21 includes a first set of hook bodies 21a and a second set of hook bodies 21b. The first set of hook bodies 21a is located on a side of the bracket 22 away from the second set of hook bodies 21b in the first direction dr1, and the second set of hook bodies 21b is located on a side of the bracket 22 away from the first set of hook bodies 21a in the second direction dr2. In Fig. 12, the first set of hook bodies 21a includes two hook bodies 21a arranged spaced apart in a fourth direction dr4, and the second set of hook bodies 21b includes two hook bodies 21b arranged spaced apart in the fourth direction dr4. Here, the fourth direction dr4 is perpendicular to the third direction dr3 and perpendicular to the first direction dr1 or the second direction dr2.

The first drive assembly 30 can drive the hook assembly 20 to move in the first direction dr1 to achieve a function of hooking and pulling the article GS in the first direction dr1 by means of a hook-and-pull portion 211 of the first set of hook bodies 21a, or to achieve a function of pushing the article GS in the first direction dr1 by means of a push portion 212 of the second set of hook bodies 21b.

The first drive assembly 30 can also drive the hook assembly 20 to move in the second direction dr2 to achieve a function of pushing the article GS in the second direction dr2 by means of a push portion 212 of the first set of hook bodies 21a, or to achieve a function of hooking and pulling the article GS in the second direction dr2 by means of a hook-and-pull portion 211 of the second set of hook bodies 21b.

In embodiments where the first direction dr1 is opposite to the second direction dr2, the first drive assembly 30 may drive the hook assembly 20 to move in the first direction dr1, and may also drive the hook assembly to move in the direction opposite to the first direction dr1, and achieves a function of hooking and pulling the article GS in the direction of movement of the hook assembly 20 or a function of pushing the article GS in the direction of movement of the hook assembly 20, which enables the pallet fork mechanism to perform operations of storing and extracting article on different sides between neighboring storage racks.

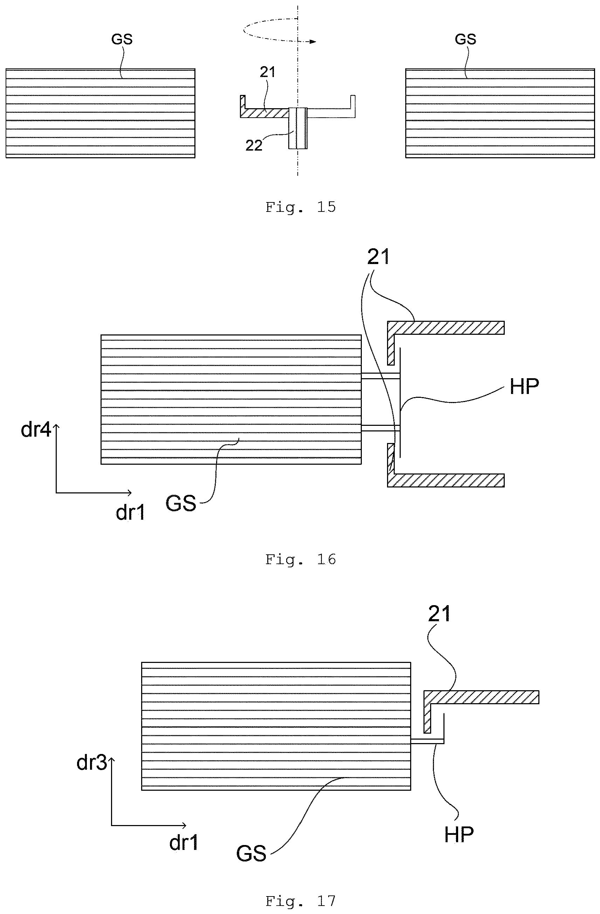

Fig. 15 is a schematic diagram of rotation for the form of a single set of hook bodies in embodiments of a pallet fork mechanism according to the present disclosure. Referring to Fig. 15, in some embodiments, the at least one set of hook bodies 21 includes a single set of hook bodies 21. Accordingly, the first drive assembly 30 can drive the hook assembly 20 to move in the first direction dr1 to achieve a function of hooking and pulling the article GS in the first direction dr1 by means of a hook-and-pull portion 211 of the single set of hook bodies 21 at a first rotation position, or to achieve a function of pushing the article GS in the first direction dr1 by means of a push portion 212 of the single set of hook bodies 21 at a second rotation position, wherein the single set of hook bodies 21 switches between the first rotation position and the second rotation position by rotation, and the single set of hook bodies 21 at the first rotation position and the single set of hook bodies 21 at the second rotation position are in central symmetry.

The first drive assembly 30 can also drive the hook assembly 20 to move in the second direction dr2 to achieve a function of pushing the article GS in the second direction dr2 by means of the push portion 212 of the single set of hook bodies 21 at a third rotation position, or to achieve a function of hooking and pulling the article GS in the second direction dr2 by means of the hook-and-pull portion 211 of the single set of hook bodies 21 at a fourth rotation position, wherein the single set of hook bodies 21 switches between the third rotation position and the fourth rotation position by rotation, and the single set of hook bodies 21 at the third rotation position and the single set of hook bodies 21 at the fourth rotation position are in central symmetry.

In Fig. 15, a solid line form of the hook body 21 indicates a situation in which the single set of hook bodies 21 is at a rotation position on a left side of the bracket 22, which can implement hooking and pulling of the article GS on the left side or pushing of the article GS on the left side. After rotation of 180°, the single set of hook bodies 21 as indicated by a dashed line form are located at a rotation position on a right side of the bracket 22, which can implement hooking and pulling of the article GS on the right side or pushing of the article GS on the right side.

In the above embodiments, the hook-and-pull portion 211 can enter or leave the hookable-and-pullable part HP of the article GS in a direction that intersects with both the first direction dr1 and the second direction dr2. Here, the direction in which the hook-and-pull portion 211 enters the hookable-and-pullable part HP may be perpendicular to the first direction dr1 or the second direction dr2, or at an acute or obtuse angle relative to the first direction dr1 and the second direction dr2.

In Figs. 7 and 8, the direction in which the hook-and-pull portion 211 enters the hookable-and-pullable part HP of the article GS is the third direction dr3, and the direction in which it leaves the hookable-and-pullable part HP is the direction opposite to the third direction dr3. That is, in some embodiments, the hook-and-pull portion 211 is configured to enter the hookable-and-pullable part HP of the article GS in a vertically upward direction. In this way, the hook-and-pull portion may enter the hookable-and-pullable part HP when the hook assembly 20 extends upwardly relative to the conveying surface of the conveying assembly 50, and the hook-and-pull portion may leave the hookable-and-pullable part HP when the hook assembly retracts downwardly relative to the conveying surface of the conveying assembly 50, which is conducive to simplifying the operations and improving the efficiency.

Figs. 16 and 17 are respectively schematic diagrams of entering a hookable-and-pullable part of article in different directions, in embodiments of a pallet fork mechanism according to the present disclosure. Fig. 16 illustrates two opposite hook-and-pull portions 211 of a hook body 21 enter a hookable-and-pullable part HP of the article GS in a fourth direction dr4 and a direction opposite to the fourth direction dr4. Here, the fourth direction dr4 is perpendicular to the third direction dr3 and perpendicular to the first direction dr1 or the second direction dr2.

Fig. 17 illustrates a situation in which a hook-and-pull portion 211 of a hook body 21 enters a hookable-and-pullable part HP of the article GS in a direction opposite to the third direction dr3. The third direction dr3 here may be a vertical upward direction.

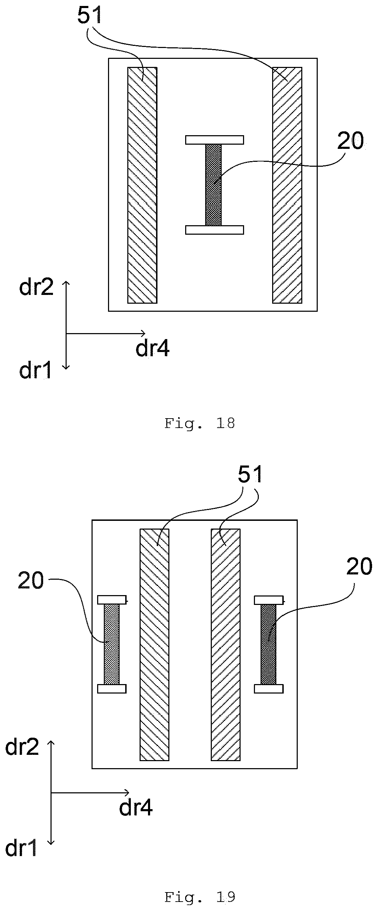

Figs. 18 and 19 are respectively schematic diagrams illustrating different relative positions between paired conveying members and a hook assembly in embodiments of a pallet fork mechanism according to the present disclosure. Referring to Figs. 4 and 18, in some embodiments, the conveying assembly 50 includes paired conveying members 51 arranged spaced apart and a conveying drive element 52 for driving the paired conveying members 51 to operate, and the hook assembly 20 is located between the paired conveying members 51. In this way, the hook assembly 20 operates between the paired conveying members 51 without interfering with the operation of the paired conveying members 51.

Referring to Fig. 19, in other embodiments, the conveying assembly 50 includes paired conveying members 51 arranged spaced apart and a conveying drive element 52 for driving the paired conveying members 51 to operate. The hook assembly 20 is located on a side of at least one conveying member 51 of the paired conveying members 51 away from the other conveying member 51. For example, two hook assemblies 20 are respectively located on two sides of the paired conveying members 51 shown in Fig. 19 in a fourth direction dr4.

In the above embodiments, in order to improve the operational stability, referring to Fig. 4, the number of hook body included in each set of hook bodies included in the hook assembly may be arranged in pair and spaced apart in the fourth direction dr4, the combination of the transmission wheel set and the transmission belt included in the first drive assembly may be arranged in pair and spaced apart in the fourth direction dr4, the conveying members included in the conveying assembly may also be arranged in pair and spaced apart in the fourth direction dr4, and the slide rails and slide blocks included in the first, second, and third linear guide structures may also be arranged in pair and spaced apart in the fourth direction dr4, which will not be described here.

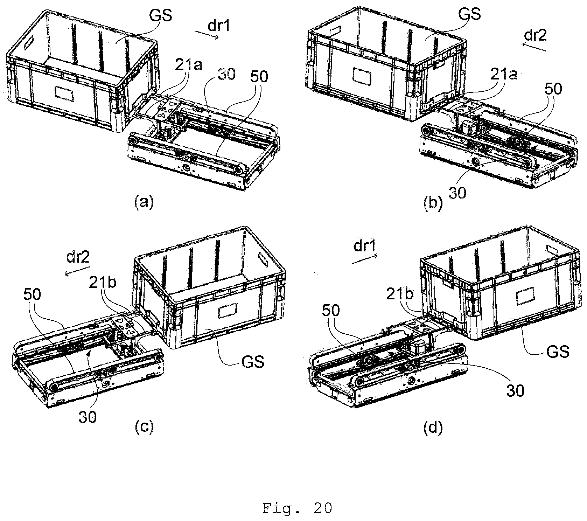

Fig. 20 shows, in (a)-(d), respectively, three-dimensional schematic diagrams of hooking and pulling and pushing the article in a first direction, and hooking and pulling and pushing article in a second direction, respectively, in embodiments of a pallet fork mechanism according to the present disclosure In order to facilitate understanding of function of hooking and pulling and function of pushing article in embodiments of a pallet fork mechanism of the present disclosure, several scenarios are illustrated respectively by (a)-(d) in Fig. 20.

In (a) of Fig. 20, the pallet fork mechanism performs a hooking and pulling operation on the article GS located on a left side of the pallet fork mechanism, at which time the first set of hook bodies 21a of the hook assembly has entered the hookable-and-pullable part of the article GS, and the article GS are caused to move in the first direction dr1 under the drive of the first drive assembly 30 so that the article GS reaches above the conveying mechanism 50.

In (b) of Fig. 20, the pallet fork mechanism performs a pushing operation on the article GS located on a left side of the pallet fork mechanism, at which time the first set of hook bodies 21a of the hook assembly pushes against an outer side of the hookable-and-pullable part of the article GS, and the article GS are caused to move in the second direction dr2 under the drive of the first driving assembly 30 so that the article GS move away from the transferring mechanism 50.

In (c) of Fig. 20, the pallet fork mechanism performs a hooking and pulling operation on the article GS located on a right side of the pallet fork mechanism, at which time the second set of hook bodies 21b of the hook assembly has entered the hookable-and-pullable part of the article GS, and the article GS are caused to move in the second direction dr2 under the drive of the first drive assembly 30 so that the article GS reaches above the conveying mechanism 50.

In (d) of Fig. 20, the pallet fork mechanism performs a pushing operation on the article GS located on a right side of the pallet fork mechanism, at which time the second set of hook bodies 21b of the hook assembly pushes against an outer side of the hookable-and-pullable part of the article GS, and the article GS are caused to move in the first direction dr1 under the drive of the first driving assembly 30 so that the article GS move away from the transferring mechanism 50.

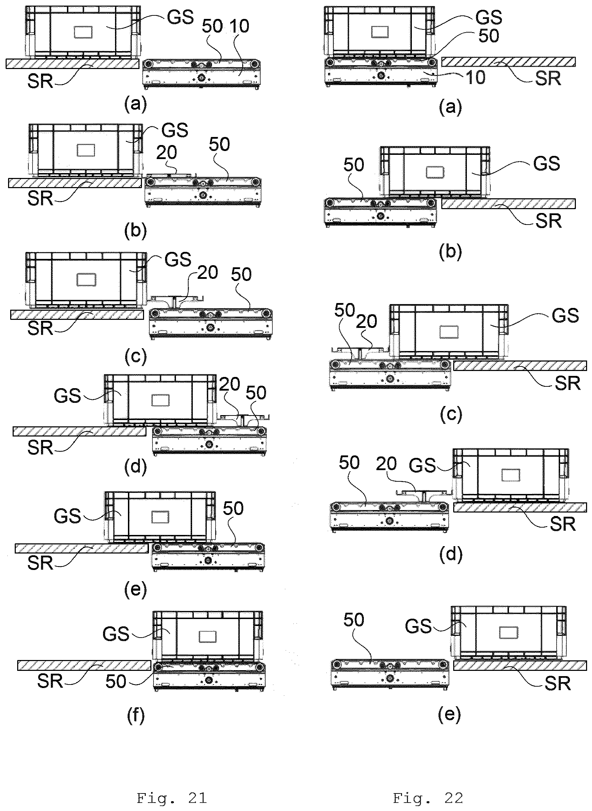

Fig. 21 shows, in (a)-(f), respectively, schematic diagrams of a process of transferring article on an article location to a pallet fork mechanism in embodiments of a pallet fork mechanism according to the present disclosure In order to facilitate understanding of how the article GS in an article location in a storage rack SR are transferred to a pallet fork mechanism in embodiments of a pallet fork mechanism of the present disclosure, the process is illustrated by (a)-(f) in Fig. 21.

In (a) of Fig. 21, the pallet fork mechanism moves to a position adjacent to the article location of the article GS to be picked up, at which time the conveying surface of the conveying mechanism 50 is substantially flush with a bottom surface of the article location. At that time, the hook assembly 20 is under the conveying surface of the conveying mechanism 50 and moves toward the article GS.

In (b) of Fig. 21, the hook assembly 20 has moved to a position adjacent to the article GS, at which position the hook assembly 20 is transversely substantially aligned with a hooking slot on a right side surface of the article GS. The hook assembly 20 translates upwardly, and a portion of the hook assembly 20 is exposed above the conveying surface of the conveying mechanism 50.

In (c) of Fig. 21, the hook assembly 20 continues to translate upwardly, and the hook-and-pull portion enters the hooking slot of the article GS.

In (d) of Fig. 21, the hook assembly 20 moves right, causing the article GS to move right as well, so that a portion of the article GS reaches the top of the conveying mechanism 50. The hook assembly 20 may move from a left end of the stroke of the pallet fork mechanism to a right end of the stroke of the pallet fork mechanism, at which time a portion of the article GS has not yet reached the top of the conveying mechanism 50.

In (e) of Fig. 21, the hook assembly 20 moves downwardly and retracts below the conveying surface of the conveying mechanism 50, at which time the conveying mechanism 50 further conveys the article GS right.

In (f) of Fig. 21, the article GS are entirely located on the conveying mechanism 50 by the conveying operation of the conveying mechanism 50, thus accomplishing an operation of extracting the article from the storage rack.

Fig. 22 shows, in (a)-(e), respectively, schematic diagrams of a process of transferring article on a pallet fork mechanism to an article location in embodiments of a pallet fork mechanism according to the present disclosure. In order to facilitate understanding of how the article GS on a pallet fork mechanism is transferred to an article location in a storage rack SR in embodiments of a pallet fork mechanism of the present disclosure, the process is illustrated by (a)-(e) in Fig. 22.

In (a) of Fig. 22, the pallet fork mechanism moves to a position adjacent to the article location in which the article GS are stored, at which time the conveying surface of the conveying mechanism 50 is substantially flush with a bottom surface of the article location. At that time, the hook assembly 20 is located under the conveying surface of the conveying mechanism 50.

In (b) of Fig. 22, the article GS are conveyed right by a conveying operation of the conveying mechanism 50 so that a portion of the article GS enters the article location.

In (c) of Fig. 22, the hook assembly 20 has moved to a left side of the article GS and upwardly into a space left on the left side after the article GS moves right, at which time the hook assembly 20 is exposed above the conveying surface of the conveying mechanism 50, and the hook-and-pull portion enters a hooking slot on a left side surface of the article GS.

In (d) of Fig. 22, the hook assembly 20 moves right and pushes the article GS to move right as well, so that the article GS entirely enters the article location.

In (e) of Fig. 22, the hook assembly 20 retracts downwardly to an initial position below the conveying surface of the conveying mechanism 50, thus accomplishing an operation of storing the article to the storage rack.

Now, embodiments of the present disclosure have been described in detail. To avoid obscuring the concept of the present disclosure, some details known in the art are not described. Based on the above description, those skilled in the art can fully understand how to implement the technical solutions disclosed herein.

Although some specific embodiments of the present disclosure have been described in detail through examples, it should be understood by those skilled in the art that the above examples are only for illustration and are not intended to limit the scope of the present disclosure. Those skilled in the art should understand that the above embodiments can be modified or some technical features can be replaced by equivalents without departing from the scope and spirit of the present disclosure. The scope of the present disclosure is defined by appended claims.

## Claims

1. A pallet fork mechanism (FM), comprising:
a mounting frame (10);
a hook assembly (20) movably provided on the mounting frame (10), and comprising a hook body (21), which has a hook-and-pull portion (211) for hooking and pulling an article (GS); and
a first drive assembly (30) in drive connection with the hook assembly (20) and configured to drive the hook assembly (20) to move in a first direction (dr1) to achieve a function of hooking and pulling the article (GS) in the first direction (dr1) by means of the hook-and-pull portion (211).

2. The pallet fork mechanism (FM) according to claim 1, wherein the hook body (21) also has a push portion (212) for pushing article (GS), and the first drive assembly (30) is further configured to drive the hook assembly (20) to move in a second direction (dr2) to achieve a function of pushing the article (GS) in the second direction (dr2) by means of the push portion (212); and optionally wherein the hook-and-pull portion (211) and the push portion (212) are located on two opposite sides of the hook body (21) in the first direction (dr1), and the second direction (dr2) is a direction opposite to the first direction (dr1).

3. The pallet fork mechanism (FM) according to claim 2, wherein the hook assembly (20) comprises a bracket (22) and at least one set of hook bodies (21) connected to the bracket (22), and each set of hook bodies (21) comprises a single hook body (21) or a plurality of hook bodies (21) located on a same side of the bracket (22) .

4. The pallet fork mechanism (FM) according to claim 3, wherein the at least one set of hook bodies (21) comprises a first set of hook bodies (21a) and a second set of hook bodies (21b), the first set of hook bodies (21a) is located on a side of the bracket (22) away from the second set of hook bodies (21b) in the first direction (dr1), and the second set of hook bodies (21b) is located on a side of the bracket (22) away from the first set of hook bodies (21a) in the second direction (dr2),
wherein the first drive assembly (30) is configured to:
drive the hook assembly (20) to move in the first direction (dr1) to achieve a function of hooking and pulling the article (GS) in the first direction (dr1) by means of a hook-and-pull portion (211) of the first set of hook bodies (21a), or to achieve a function of pushing the article (GS) in the first direction (dr1) by means of a push portion (212) of the second set of hook bodies (21b); and/or
drive the hook assembly (20) to move in the second direction (dr2) to achieve a function of pushing the article (GS) in the second direction (dr2) by means of a push portion (212) of the first set of hook bodies (21a), or to achieve a function of hooking and pulling the article (GS) in the second direction (dr2) by means of a hook-and-pull portion (211) of the second set of hook bodies (21b) .

5. The pallet fork mechanism (FM) according to claim 3, wherein the at least one set of hook bodies (21) comprises a single set of hook bodies (21),
wherein the first drive assembly (30) is configured to:
drive the hook assembly (20) to move in the first direction (dr1) to achieve a function of hooking and pulling the article (GS) in the first direction (dr1) by means of a hook-and-pull portion (211) of the single set of hook bodies (21) at a first rotation position, or to achieve a function of pushing the article (GS) in the first direction (dr1) by means of a push portion (212) of the single set of hook bodies (21) at a second rotation position, wherein the single set of hook bodies (21) switches between the first rotation position and the second rotation position by rotation, and the single set of hook bodies (21) at the first rotation position and the single set of hook bodies (21) at the second rotation position are in central symmetry; and/or
drive the hook assembly (20) to move in the second direction (dr2) to achieve a function of pushing the article (GS) in the second direction (dr2) by means of a push portion (212) of the single set of hook bodies (21) at a third rotation position, or to achieve a function of hooking and pulling the article (GS) in the second direction (dr2) by means of a hook-and-pull portion (211) of the single set of hook bodies (21) at a fourth rotation position, wherein the single set of hook bodies (21) switches between the third rotation position and the fourth rotation position by rotation, and the single set of hook bodies (21) at the third rotation position and the single set of hook bodies (21) at the fourth rotation position are in central symmetry.

6. The pallet fork mechanism (FM) according to any one of claims 2-5, wherein the first drive assembly (30) comprises:
a hook seat (31) connected to the hook assembly (20); and
a first power element (32) connected to the hook seat (31) by a first linear transmission structure (33), and configured to drive, by means of the first linear transmission structure (33), the hook seat (31) to move in the first direction (dr1) or the second direction (dr2);
optionally wherein the first linear transmission structure (33) comprises:
a transmission wheel set (331) provided on the mounting frame (10) and connected to the first power element (32); and
a transmission belt (332) wound around the transmission wheel set (331) and fixedly connected to the hook seat (31).

7. The pallet fork mechanism (FM) according to any one of claims 1-6, further comprising:
a second drive assembly (40) in drive connection with the hook assembly (20), and configured to drive the hook assembly (20) to move in a third direction (dr3) or in a direction opposite to the third direction (dr3),
wherein the third direction (dr3) is perpendicular to the first direction (dr1); and optionally wherein the first direction (dr1) is parallel to a horizontal plane, and the third direction (dr3) is parallel to a vertical direction.

8. The pallet fork mechanism (FM) according to claim 7, wherein the first drive assembly (30) comprises a hook seat (31) connected to the hook assembly (20), and the second drive assembly (40) comprises:
a second power element (41) connected to at least one of the hook seat (31) and the hook assembly (20), and configured to drive the hook assembly (20) to move relative to the hook seat (31);
optionally wherein the second power element (41) comprises:
a first through-shaft screw motor having a first electric motor housing (411) fixedly connected to the hook seat (31), and a first lead screw (412) running through the first electric motor housing (411), one end of the first lead screw (412) being connected to the hook assembly (20), and the other end of the first lead screw (412) running through the hook seat (31).

9. The pallet fork mechanism (FM) according to any one of claims 1-8, further comprising:
a conveying assembly (50) provided on the mounting frame (10), and configured to convey article (GS) in the first direction (dr1) or the second direction (dr2);
optionally wherein time ranges in which the conveying assembly (50) and hook assembly (20) respectively act on the article (GS) are configured to not overlap or to overlap at least partially.

10. The pallet fork mechanism (FM) according to claim 9, wherein the conveying assembly (50) is located on an upper side of the mounting frame (10), and the pallet fork mechanism (FM) further comprises:
a second drive assembly (40) in drive connection with the hook assembly (20) or the first drive assembly (30), and configured to drive the hook assembly (20) to move in the third direction (dr3) or in the direction opposite to the third direction (dr3), so that the hook assembly (20) extends or retracts relative to a conveying surface of the conveying assembly (50).

11. The pallet fork mechanism (FM) according to claim 9 or 10, wherein the conveying assembly (50) comprises paired conveying members (51) arranged spaced apart and a conveying drive element (52) for driving the paired conveying members (51) to operate, and the hook assembly (20) is located between the paired conveying members (51) or located on a side of at least one conveying member (51) of the paired conveying members (51) away from the other conveying member.

12. The pallet fork mechanism (FM) according to any one of claims 1-11, further comprising:
a bracket (60),
wherein the mounting frame (10) is fixedly, detachably or movably provided on the bracket (60);
and optionally wherein the pallet fork mechanism (FM) further comprises:
a third drive assembly (70) provided on the bracket (60) and in drive connection with the mounting frame (10), and configured to drive the mounting frame (10) to move relative to the bracket (60) in the first direction (dr1) or in a direction opposite to the first direction (dr1).

13. The pallet fork mechanism (FM) according to claim 12, wherein the third drive assembly (70) comprises:
a third power element (71) connected to the mounting frame (10), and configured to drive the mounting frame (10) to move relative to the bracket (60);
optionally wherein the third power element (71) comprises:
a second through-shaft screw motor having a second electric motor housing (711) fixedly connected to the bracket (60), and a second lead screw (712) running through the second electric motor housing (711), both ends of the second lead screw (712) being connected to the mounting frame (10).

14. An article storing and extracting device, comprising:
the pallet fork mechanism according to any one of claims 1-13.

15. A storage logistics system, comprising:
a storage rack (SR); and
the article storing and extracting device according to claim 14, provided on the storage rack (SR).
